# EUROPÄISCHE PATENTSCHRIFT

(11) **EP 3 314 145 B1**
(45) Veröffentlichungstag und Bekanntmachung des Hinweises auf die Patenterteilung: **26.06.2019**
(21) Anmeldenummer: 16726824.2
(22) Anmeldetag: 23.05.2016
(51) Int. Cl.: F16F 9/348, F16F 9/512

(54) **FREQUENZABHÄNGIGE DÄMPFVENTILANORDNUNG**
FREQUENCY-DEPENDENT DAMPING VALVE ARRANGEMENT
AGENCEMENT DE SOUPAPE D'AMORTISSEMENT DÉPENDANT DE LA FRÉQUENCE

(30) Priorität: 26.06.2015 DE 102015211891
(43) Veröffentlichungstag der Anmeldung: 02.05.2018
(73) Patentinhaber: ZF Friedrichshafen AG, 88046 Friedrichshafen (DE)
(72) Erfinder: FÖRSTER, Andreas, 97422 Schweinfurt (DE)
(86) Internationale Anmeldenummer: PCT/EP2016/061522
(87) Internationale Veröffentlichungsnummer: WO 2016/206880

(56) Entgegenhaltungen:
- GB-A- 2 222 227
- US-A1- 2006 283 675

## Beschreibung

Die Erfindung betrifft eine Dämpfventilanordnung mit einer frequenzabhängigen Dämpfkraftkennlinie, gemäß Patentanspruch 1.

Die Aufgabe eines Schwingungsdämpfers in einem Kraftfahrzeug ist es die von dem unebenen Straßenbelag angeregten Schwingungen zu dämpfen. Dabei muss stets ein Kompromiss zwischen der Fahrsicherheit und dem Fahrkomfort gefunden werden. Ein Schwingungsdämpfer, dessen Dämpfventilanordnung hart abgestimmt ist und eine hohe Dämpfkraftkennlinie aufweist ist optimal für eine hohe Fahrsicherheit. Soll ein hoher Komfortanspruch erfüllt werden, so soll die Dämpfventilanordnung möglichst weich abgestimmt werden. Bei einem Schwingungsdämpfer mit einer konventionellen, nicht elektronisch mit Hilfe eines Aktuators verstellbaren Dämpfventilanordnung kann dieser Kompromiss nur sehr schwer gefunden werden.

Aus dem Stand der Technik sind Dämpfventilanordnungen mit einer frequenzabhängigen Dämpfkraftkennlinie bekannt, welche mit einer zusätzlichen elektronischen und/oder Mechanischen Steuerung ausgerüstet sind und in Abhängigkeit von einer Einfederungs- und/oder Ausfederungsfrequenz des Schwingungsdämpfers eine zusätzliche Dämpfventilanordnung zuschalten oder abschalten.

Beispielhaft dafür können die DE 44 41 047 C1, US 2006 28 36 75 A oder die US 49 53 671 A genannt werden.

Es sind ebenfalls Lösungen bekannt, eine an der Kolbenstange, koaxial zu dem Dämpfkolben angebrachte Steueranordnung aufweisen, umfassend einen Steuertopf, sowie einen im Steuertopf angeordneten axial verschiebbaren Steuerkolben. Der Steuerkolben begrenzt axial einen im Steuertopf eingeschlossenen Steuerraum, welcher über eine Zulaufverbindung mit der Dämpfventilanordnung verbunden ist. Zwischen dem Steuerkolben und dem Dämpfventil ist ein Federelement angeordnet, welcher eine Federkraft in den Steuerkolben einerseits und in das Dämpfventil andererseits axial einleitet. Wird der Steuerraum mit dem Dämpffluid befüllt, so verschiebt sich der Steuerkolben in Richtung Dämpfventil und erhöht über das Federelement den Anpressdruck der Ventilscheiben des Dämpfventils, was die Dämpfkraft erhöht.

Alle bekannten Dämpfventilanordnungen zeichnen sich jedoch durch eine hohe Komplexität aus, unter Anderem da diese eine hohe Abstimmungsgenauigkeit erfordern. Insbesondere ist es schwierig bei diesen Schwingungsdämpfern die weiche und die harte Dämpfkraftkennlinie ohne zusätzliche Steuerung einzustellen.

Die Aufgabe dieser Erfindung ist daher, eine einfach aufgebaute und kostengünstige Dämpfventilanordnung anzugeben, welche eine frequenzabhängige Dämpfkraftkennlinie aufweist und eine einfache definierte Beeinflussung der harten Dämpfkraftkennlinie während des Betriebs ermöglicht.

Diese Aufgabe wird durch eine Dämpfventilanordnung mit Merkmalen gemäß Patentanspruch 1 gelöst. Weitere vorteilhafte Ausführungen sind in den Figuren, sowie in den abhängigen Ansprüchen angegeben.

Erfindungsgemäß weist die Dämpfventilanordnung einen Verbindungskanal auf, welcher den ersten Arbeitsraum mit dem zweiten Arbeitsraum verbindet, wobei der Verbindungskanal derart angeordnet ist, dass dieser bei einer axialen Verschiebung des Steuerkolben in Richtung des Dämpfkolbens von dem Steuerkolben zumindest teilweise verschlossen und bei einer axialen Verschiebung des Steuerkolbens in Richtung des Topfbodens wieder geöffnet wird.

Dadurch wird die Durchflussmenge des Dämpffluides in den Steuerraum zusätzlich gesteuert und somit die harte Dämpfkraftkennlinie definiert beeinflusst.

Anhand folgender Figurenbeschreibung soll die Erfindung näher erläutert werden. Es zeigen:
- Fig. 1:: Eine Schnittdarstellung eines Ausführungsbeispiels einer Dämpfventilanordnung gemäß Patentanspruch 1;
- Fig. 2: Eine Schnittdarstellung eines Ausführungsbeispiels einer Führungsbuchse;
- Fig. 3: Eine Schnittdarstellung eines alternativen Ausführungsbeispiels einer Führungsbuchse;
- Fig. 4: Eine Schnittdarstellung eines alternativen Ausführungsbeispiels einer Führungsbuchse;
- Fig. 5: Eine Schnittdarstellung eines alternativen Ausführungsbeispiels einer Steueranordnung.

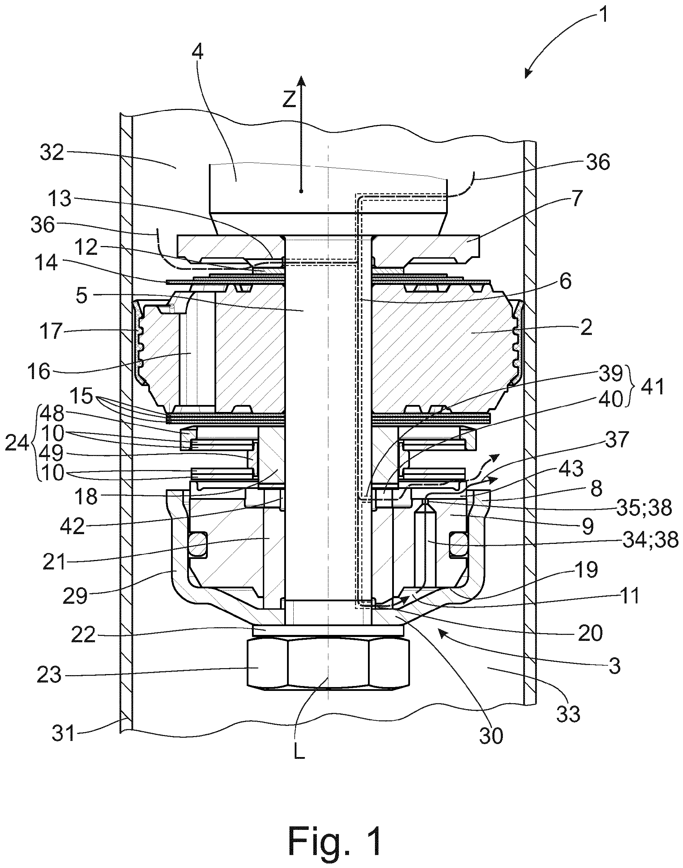

Die Fig. 1 zeigt eine beispielsweise Ausführungsvariante einer Dämpfventilanordnung gemäß Patentanspruch 1.

Die Fig. 1 zeigt eine Kolbenstange 4, welche einen Kolbenstangenzapfen 5 aufweist. Bei dem Kolbenstangenzapfen 5 handelt es sich um einen im Durchmesser reduzierten Abschnitt der Kolbenstange 4. Die gesamte Dämpfventilanordnung 1 ist an dem Kolbenstangenzapfen 5 aufgefädelt und ist zwischen einem an dem Kolbenstangenzapfen 5 angrenzenden Abschnitt der Kolbenstange 4, welcher einen größeren Durchmesser aufweist als der Kolbenstangenzapfen 5, und einem Befestigungsmittel 23, welcher in der Fig. 1 als eine Kolbenstangenmutter dargestellt ist, axial verspannt.

Wie in der Fig. 1 dargestellt, umfasst die Dämpfventilanordnung 1 einen Dämpfkolben 2, welcher innerhalb eines mit einem Dämpffluid gefüllten Zylinders 31 angeordnet und an einer Kolbenstange 4 axial festgelegt ist. Der Dämpfkolben 2 ist mit einer Kolbendichtung 17 ausgestattet, welche diesen gegenüber dem Zylinder 31 radial abdichtet. Der an der Kolbenstange 4 festgelegte Dämpfkolben 2 ist innerhalb des Zylinders 31 gemeinsam mit der Kolbenstange 4 axial verschiebbar angeordnet und unterteilt den Zylinderinnenraum in einen ersten, kolbenstangenseitigen Arbeitsraum 32 und einen zweiten, von der Kolbenstange 4 abgewandten Arbeitsraum 33.

Der Dämpfkolben 2 ist mit jeweils einem Rückschlagventil in jeder Strömungsrichtung des Dämpffluides ausgestattet. Die Rückschlagventile umfassen dabei jeweils mindestens einen im Dämpfkolben 2 ausgeführten Strömungskanal 16, welcher mit mindestens einer Ventilscheibe 15 abgedeckt ist. Wie in den Figuren dargestellt, können die Strömungskanäle 16 durch mehrere übereinander gestapelte Ventilscheiben 15 - sogenannte Ventilscheibenpakete abgedeckt sein. Die Anzahl, die Größe und die Ausgestaltung der einzelnen Ventilscheiben; 15 in einem Ventilscheibenpaket definieren den Anpressdruck, sowie die Dämpfkennlinie, und das Dämpfverhalten eines Schwingungsdämpfers.

An der Kolbenstange 4 ist eine Steueranordnung 3, koaxial zu dem Dämpfkolben 2 angebracht, wobei die Steueranordnung 3 einen dünnwandigen Steuertopf 8 und einen im Steuertopf 8 axial verschiebbaren Steuerkolben 9 umfasst. Der Steuertopf ist aus Blech ausgeformt. Der Steuerkolben 9 kann aus einem Metall, einem Keramikmaterial sowie auch aus einem geeigneten Kunststoff, mit oder auch ohne Faserverstärkung durch Kaltumformen, Warmumformen, Gießen, Spritzgießen, Drehen oder auch Sintern ausgeführt sein. Der Steuertopf 8 weist eine zylinderförmige Topfwand 29 und einen scheibenförmigen, an einem von dem Dämpfkolben 2 abgewandten Ende des Steuertopfes 8 angeordneten Topfboden 30 auf.

Der im Steuertopf 8 angeordnete Steuerkolben 9 begrenzt auf der dem Rückschlagventil zugewandten Seite axial einen im Steuertopf 8 eingeschlossenen Steuerraum 11, sodass eine axiale Verschiebung des Steuerkolbens 9 innerhalb des Steuertopfes 8 das Volumen des Steuerraums 11 definiert verändert.

Die Dämpfventilanordnung 1 weist des Weiteren eine Zulaufverbindung 36 auf, welche den ersten Arbeitsraum 32 mit dem Steuerraum 11 verbindet. Diese umfasst in der in Fig. 1 abgebildeten Ausführungsvariante einen an der Kolbenstange 4 ausgeführten Bypass 6, sowie mindestens eine den Bypass 6 mit dem Steuerraum 11 verbindende Zulaufdrossel 20. Darüber hinaus kann die Zulaufverbindung 36 mindestens eine den Bypass 6 mit dem ersten Arbeitsraum 32 verbindende Strömungsausnehmung 13 umfassen.

Des Weiteren weist die Dämpfventilanordnung 1 eine Ablaufverbindung 37 auf, welche den Steuerraum 11 mit dem zweiten Arbeitsraum 33 verbindet.

Die in den Figuren abgebildeten Ausführungsvarianten sehen vor, dass zwischen dem Dämpfkolben 2 und dem Topfboden 30 der Steueranordnung 3 ein Anschlagelement 18, sowie eine rohrförmige Führungsbuchse 21 angeordnet sind.

Zwischen dem Steuerkolben 9 und dem Rückschlagventil ist eine Federanordnung 24 in Form mehrerer Federscheiben 10 angeordnet. Gemäß der in Fig. 1 dargestellten Ausführungsvariante umfasst die Federanordnung 24 vier Federscheiben 10, welche in zwei Federscheibenpaare zusammengefasst sind, sowie ein äußeres Stützbauteil und ein inneres Stützbauteil, wobei es bei der dargestellten Federanordnung 24 auf die Position der Federscheibe in der Federanordnung 24 ankommt und die Anzahl der Federscheiben 10 eher eine untergeordnete Rolle Spielt. Wie in der Fig. 1 dargestellt, stützt sich das eine, dem Steuerkolben 9 zugewandte Federscheibenpaar mit dessen äußerem Randbereich an dem Steuerkolben 9 axial ab. Dazu beabstandet ist das zweite Federscheibenpaar koaxial angeordnet, wobei der Innere Randbereich der beiden Federscheibenpaare sich axial an dem inneren Stützbauteil abstützen. Das zweite, der Ventilscheibe 15 zugewandte Federscheibenpaar wird in dessen äußerem Randbereich von dem äußeren Stützbauteil gestützt, welches an der gegenüberliegenden Seite zu der Ventilscheibe 15 zugewandt ist und sich an diese im Betriebszustand anlegt.

Die Federanordnung 24 beaufschlagt somit die Ventilscheibe 15 axial in Richtung des Strömungskanals 16 und den Steuerkolben 9 in Richtung des Topfbodens 30 mit einer definierten Federkraft.

Der Steuerkolben 9 umgreift die Führungsbuchse 21 in Umfangsrichtung und gleitet axial an der äußeren Oberfläche der Führungsbuchse 21, während einer Volumenveränderung des Steuerraums 11. Ein Anschlagelement 18 ist zwischen der Führungsbuchse 21 und dem Dämpfkolben 4 verspannt und weist einen größeren Außendurchmesser als die Führungsbuchse 21 auf. Das Anschlagelement 18 dient als axialer Anschlag für den Steuerkolben 9, welcher die axiale Bewegung des Steuerkolbens 9 in Richtung Dämpfkolben 4 begrenzt und die harte Dämpfkraftkennlinie beeinflusst. Darüber hinaus übernimmt das Anschlagelement 18 die Funktion einer Führung für die Federanordnung 24, wobei die Federanordnung 24 das Anschlagelement 18 in Umfangsrichtung umgreift.

Des Weiteren weist die Dämpfventilanordnung einen Verbindungskanal 41 auf, welcher in dem Bypass 6 mündet und den ersten Arbeitsraum 32 mit dem zweiten Arbeitsraum 33 verbindet. Die in Fig. 1 abgebildete Ausführungsvariante sieht vor, dass an der Kolbenstange 4 eine Strömungsverbindung 39, an der Führungsbuchse 21 eine Ausnehmung 40 und an dem Steuerkolben 4 ein Durchbruch 43 ausgeführt ist. Diese sind derart angeordnet, dass sie einander zumindest teilweise überlagern, sodass schließlich der Verbindungskanal 41 gebildet wurde.

Es sei an dieser Stelle angemerkt, dass die in Fig. 1 dargestellte Ausführungsvariante nicht als die einzig mögliche zu sehen ist und den Schutzumfang keineswegs einschränken soll.

Im Folgenden soll die Funktionsweise näher erläutert werden.

Bei einer Bewegung der Kolbenstange 4 und der daran festgelegten Dämpfventilanordnung 1 in Zugrichtung Z wird das Dämpffluid über die Zulaufverbindung 36 aus dem Arbeitsraum 32 in den Steuerraum 11 und teilweise über den Verbindungskanal 41 in den Arbeitsraum 33 befördert. Der Steuerkolben 9 wird aufgrund des sich mit dem Dämpffluid füllenden Steuerraumes 11 in Richtung Dämpfkolben 2 verschoben und spannt dabei die sich an der Ventilscheibe 15 des Rückschlagventils axial abstützende Federanordnung 24 weiter vor. Dadurch wird die Dämpfkraft des Rückschlagventils erhöht.

Der sich in Richtung Dämpfkolben 2 bewegende Steuerkolben 9 verschließt immer mehr den Verbindungskanal 41, wodurch die harte Dämpfkraftkennlinie definiert ansteigt.

Bei schnellen, kleineren Axialbewegungen des Dämpfkolbens 2 innerhalb des Zylinders 31 wird der Steuerraum 11 gar nicht oder nur geringfügig befüllt, so dass die Federanordnung 24 nicht weiter vorgespannt wird und die Dämpfkraft auf einem definiertem niedrigem Niveau bleibt. Bei größeren, langsameren Axialbewegungen des Dämpfkolbens 2 innerhalb des Zylinders 31 jedoch ist das Integral aus der Dofferenz von Dämpffluiddruck auf die Ventilscheibe 15 zu Dämpffluiddruck im Steuerraum 11 über die Zeit, trotz des Drosselwiderstandes der Zulaufverbindung 36 groß genug, um dem Steuerraum 11 so viel Dämpffluid zuzuführen, dass der Steuerkolben 9 die Federanordnung 24 vorspannt, bis der Steuerkolben 9 auf ein zwischen der Führungsbuchse 21 und den Ventilscheiben 15 des Rückschlagventils angeordnete Anschlagelement 18 trifft. Das Anschlagelement 18 begrenzt die axiale Bewegung des Steuerkolbens 9 in Richtung Dämpfkolben 2, und begrenzt damit die maximale Vorspannung der Federanordnung 24 und damit auch die höchste Dämpfkraftkennlinie, da auch der Verbindungskanal 41 hier seinen kleinsten Durchlassquerschnitt und damit den größten Strömungswiderstand eingenommen hat.

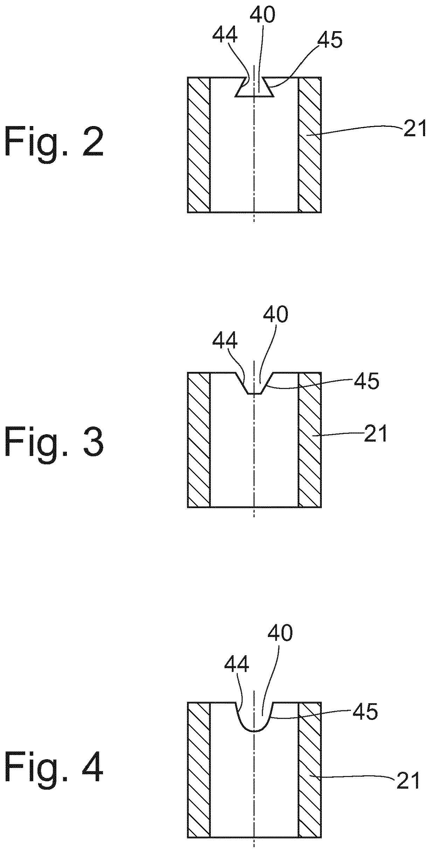

Sowohl die Höhe der auf die Ventilscheibe 15 wirkenden Vorspannung, als auch die Menge des durch den Verbindungskanal 41 strömenden Dämpffluides lassen sich bei der erfindungsgemäßen Konstruktion unabhängig voneinander beliebig innerhalb gewisser Grenzen einstellen. Die Vorspannung ist durch die Steifigkeit der Federanordnung 24 und den Weg des Steuerkolbens definiert. Die Menge des durch den Verbindungskanal 41 strömenden Dämpffluides über die tangentiale Breite und die Anzahl der Verbindungskanäle 41. Soll sich Die Menge des Dämpffluides nichtlinear mit dem Weg des Steuerkolbens 9 verändern, so lässt sich dies leicht realisieren, in dem die tangentialen Randabschnitte der Verbindungskanäle nicht parallel zueinander verlaufen, wie es beispielsweise in den Figuren 2, 3 und 4 dargestellt ist.

Soll die Verstellung der Menge des durch den Verbindungskanal 41 strömenden Dämpffluides dominant sein, so wird man die Steifigkeit der Federanordnung 24 sehr weich ausführen. Dann kann beispielsweise eine in den Figuren nicht dargestellte zusätzliche Feder verwendet werden, die eine Kraft auf den Steuerkolben 9 ausübt, welche diesen in die Ausgangsstellung drückt. Diese Feder könnte sich beispielsweise nicht an der Ventilscheibe 15, sondern zumindest mittelbar an der Kolbenstange 4 abstützen, beispielweise an dem Anschlagelement 18.

Die Figuren 2, 3 und 4 zeigen eine an der Führungsbuchse 21 ausgeführte Ausnehmung 40, welche zumindest teilweise schräg zueinander verlaufende tangentialen Randabschnitte 44; 45 aufweist. Es kann aber auch vorgesehen sein, dass die an der Führungsbuchse 21 ausgeführte Ausnehmung (40) zumindest teilweise parallel zueinander verlaufende tangentialen Randabschnitte 44; 45 aufweist, wodurch eine mit dem Weg des Steuerkolbens 9 lineare Veränderung der Durchflussmenge des durch den Verbindungskanal 41 strömenden Dämpffluides darstellbar wäre.

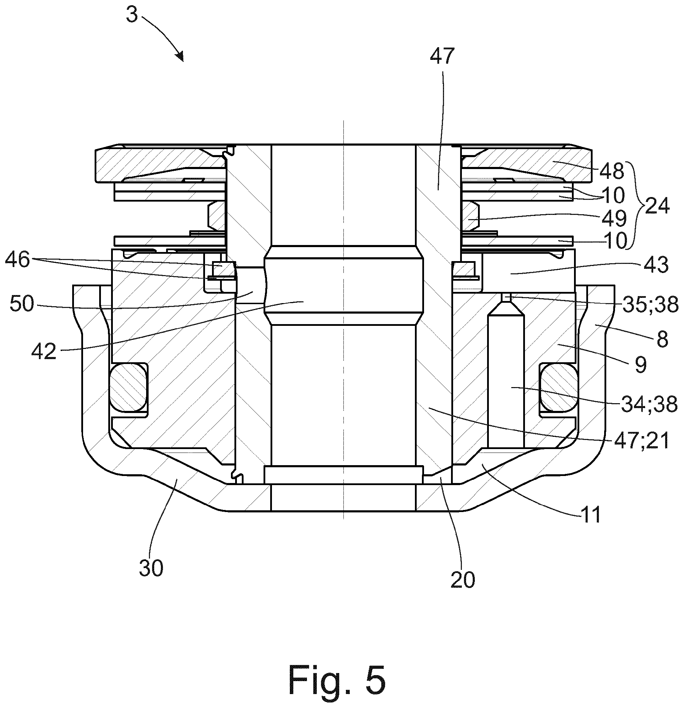

Im Unterschied zu der Fig. 1 umfasst die in der Fig. 5 dargestellte Steueranordnung 3 mehrere scheibenförmige Einstellbauteile 46, welche den Verbindungskanal 41 zusätzlich zumindest teilweise verdecken.

Darüber hinaus ist die in der Fig. 5 dargestellte Steueranordnung 3 als eine vormontierbare Einheit realisiert, welche eine durchgehende innere Hülse 47 umfasst, welche alle Komponenten der Steueranordnung 3 durchdringt und durch eine plastische Verformung der Randbereiche zusammenhält. Darüber hinaus übernimmt die Hülse 47 die Aufgabe der Führungsbuchse 21 und des Anschlagelements 18. Die Hülse 47 umfasst eine oder mehrere zur Bildung des Verbindungskanals 41 ausgeführte Querbohrungen, welche den Ausnehmungen 40 in der Fig. 1 funktionell entsprechen und welche beim Verschieben des Steuerkolbens 9, wie vorstehend beschrieben, verschlossen werden.

### Bezugszeichen

- 1: Dämpfventilanordnung
- 2: Dämpfkolben
- 3: Steueranordnung
- 4: Kolbenstange
- 5: Kolbenstangenzapfen
- 6: Bypass
- 7: Stützscheibe
- 8: Steuertopf
- 9: Steuerkolben
- 10: Federscheibe
- 11: Steuerraum
- 12: Kippscheibe
- 13: radiale Strömungsausnehmung
- 14: Ventilscheibe
- 15: Ventilscheibe
- 16: Strömungskanal
- 17: Kolbendichtung
- 18: Anschlagelement
- 19: Anschlag
- 20: Zulaufdrossel
- 21: Führungsbuchse
- 22: Scheibe
- 23: Befestigungsmittel
- 24: Federanordnung
- 29: Topfwand
- 30: Topfboden
- 31: Zylinder
- 32: erster Arbeitsraum
- 33: zweiter Arbeitsraum
- 34: erste Drosselausnehmung
- 35: zweite Drosselausnehmung
- 36: Zulaufverbindung
- 37: Ablaufverbindung
- 38: Ablaufdrossel
- 39: Strömungsverbindung
- 40: Ausnehmung
- 41: Verbindungskanal
- 42: Ringraum
- 43: Durchbruch
- 44: Randabschnitt
- 45: Randabschnitt
- 46: Einstellbauteil
- 47: Hülse
- 48: äußeres Stützbauteil
- 49: inneres Stützbauteil
- 50: Querbohrung

- L: Längsachse
- Z: Zugrichtung

## Patentansprüche

1. Dämpfventilanordnung (1) für einen Schwingungsdämpfer, umfassend:
- einen innerhalb eines mit einem Dämpffluid zumindest teilweise gefüllten Zylinders (31) angeordneten, an einer Kolbenstange (4) axial festgelegten, axial verschieblichen Dämpfkolben (2) welcher mindestens einen im Dämpfkolben (2) ausgeführten, mit mindestens einer Ventilscheibe (15) abgedeckten Strömungskanal (16) aufweist und welcher den Zylinder (31) in einen ersten, kolbenstangenseitigen Arbeitsraum (32) und einen zweiten, von der Kolbenstange (4) abgewandten Arbeitsraum (33) unterteilt,
- eine an der Kolbenstange (4), koaxial zu dem Dämpfkolben (2) angebrachte Steueranordnung (3), umfassend einen Steuertopf (8) mit einer zylinderförmigen Topfwand (29) und einem scheibenförmigen, an einem von dem Dämpfkolben (2) abgewandten Ende des Steuertopfes (8) angeordneten Topfboden (30), sowie einen im Steuertopf (8) angeordneten axial verschiebbaren Steuerkolben (9), welcher einen im Steuertopf (8) eingeschlossenen Steuerraum (11) axial begrenzt und wobei die Dämpfventilanordnung (1) eine Zulaufverbindung (36) aufweist, welche den ersten Arbeitsraum (32) mit dem Steuerraum (11) verbindet, und wobei zwischen dem Steuerkolben (8) und dem Dämpfkolben (2) mindestens eine Federanordnung (24) angeordnet ist, welche die Ventilscheibe (15) axial in Richtung des Strömungskanals (16) und den Steuerkolben (9) in Richtung des Topfbodens (30) mit einer definierten Federkraft beaufschlagt, **dadurch gekennzeichnet, dass** die Dämpfventilanordnung einen Verbindungskanal (41) aufweist, welcher den ersten Arbeitsraum (32) mit dem zweiten Arbeitsraum (33) verbindet, wobei der Verbindungskanal (41) derart angeordnet ist, dass dieser bei einer axialen Verschiebung des Steuerkolbens (9) in Richtung des Dämpfkolbens (2) von dem Steuerkolben (9) zumindest teilweise verschlossen und bei einer axialen Verschiebung des Steuerkolbens (9) in Richtung des Topfbodens (30) wieder geöffnet wird.

2. Dämpfventilanordnung (1) für einen Schwingungsdämpfer nach Anspruch 1, **dadurch gekennzeichnet, dass** der Verbindungskanal (41) eine an der Kolbenstange (4) ausgeführte Strömungsverbindung (39) umfasst.

3. Dämpfventilanordnung (1) für einen Schwingungsdämpfer nach zumindest einem der Ansprüche 1 oder 2, **dadurch gekennzeichnet, dass** zwischen dem Dämpfkolben (2) und dem Topfboden (30) der Steueranordnung (3) eine rohrförmige Führungsbuchse (21) angeordnet ist, wobei der Steuerkolben (9) die Führungsbuchse (21) in Umfangsrichtung umgreift und axial an einer äußeren Oberfläche der Führungsbuchse (21) gleitet, und dass der Verbindungskanal (41) eine an der Führungsbuchse (21) ausgeführte Ausnehmung (40) umfasst.

4. Dämpfventilanordnung (1) für einen Schwingungsdämpfer nach Anspruch 1, **dadurch gekennzeichnet, dass** der Verbindungskanal (41) einen an dem Steuerkolben (4) ausgeführten Durchbruch (43) umfasst.

5. Dämpfventilanordnung (1) für einen Schwingungsdämpfer nach Anspruch 3, **dadurch gekennzeichnet, dass** die an der Führungsbuchse (21) ausgeführte Ausnehmung (40) zumindest teilweise parallel zueinander verlaufende tangentialen Randabschnitte (44; 45) aufweist.

6. Dämpfventilanordnung (1) für einen Schwingungsdämpfer nach Anspruch 3, **dadurch gekennzeichnet, dass** die an der Führungsbuchse (21) ausgeführte Ausnehmung (40) zumindest teilweise schräg zueinander verlaufende tangentialen Randabschnitte (44; 45) aufweist.

7. Dämpfventilanordnung (1) für einen Schwingungsdämpfer nach Anspruch 1, **dadurch gekennzeichnet, dass** die Steueranordnung (3) mindestens ein Einstellbauteil (46) umfasst, welches den Verbindungskanal (41) zumindest teilweise und zumindest zeitweise verdeckt.

8. Dämpfventilanordnung (1) für einen Schwingungsdämpfer nach Anspruch 1, **dadurch gekennzeichnet, dass** die Steueranordnung (3) eine durchgehende innere Hülse (47) umfasst, welche alle Komponenten der Steueranordnung (3) durchdringt und durch eine plastische Verformung der Randbereiche zusammenhält.

9. Dämpfventilanordnung (1) für einen Schwingungsdämpfer nach Anspruch 8, **dadurch gekennzeichnet, dass** die Hülse (47) umfasst mindestens eine zur Bildung des Verbindungskanals (41) ausgeführte Querbohrung (50) aufweist, welche bei einer axialen Verschiebung des Steuerkolbens (9) in Richtung der Federanordnung (24) von dem Steuerkolben (9) zumindest teilweise verschlossen und bei einer axialen Verschiebung des Steuerkolbens (9) in Richtung des Topfbodens (30) wieder geöffnet wird.

## Claims

1. Damping valve arrangement (1) for a vibration damper, comprising:
- an axially displaceable damping piston (2), which is arranged inside a cylinder (31) at least partially filled with a damping fluid, is axially fixed on a piston rod (4), has at least one flow channel (16) formed in the damping piston (2) and covered by at least one valve disc (15) and divides the cylinder (31) into a first working chamber (32), on the piston rod side, and a second working chamber (33), remote from the piston rod (4),
- a control arrangement (3) attached to the piston rod (4), coaxially in relation to the damping piston (2), comprising a control pot (8) with a cylindrical pot wall (29) and a disc-shaped pot base (30) arranged at an end of the control pot (8) remote from the damping piston (2), and comprising an axially displaceable control piston (9), which is arranged in the control pot (8) and axially delimits a control space (11) enclosed in the control pot (8), and wherein the damping valve arrangement (1) has an inlet connection (36), which connects the first working chamber (32) to the control space (11), and wherein at least one spring arrangement (24) is arranged between the control piston (8) and the damping piston (2) and acts with a defined spring force on the valve disc (15) axially in the direction of the flow channel (16) and on the control piston (9) in the direction of the pot base (30), **characterized in that** the damping valve arrangement has a connecting channel (41), which connects the first working chamber (32) to the second working chamber (33), wherein the connecting channel (41) is arranged in such a way that, when there is an axial displacement of the control piston (9) in the direction of the damping piston (2), it is at least partially closed by the control piston (9) and, when there is an axial displacement of the control piston (9) in the direction of the pot base (30), it is opened again.

2. Damping valve arrangement (1) for a vibration damper according to Claim 1, **characterized in that** the connecting channel (41) comprises a flow connection (39) formed at the piston rod (4).

3. Damping valve arrangement (1) for a vibration damper according to at least one of Claims 1 or 2, **characterized in that** a tubular guide bush (21) is arranged between the damping piston (2) and the pot base (30) of the control arrangement (3), wherein the control piston (9) encloses the guide bush (21) in the circumferential direction and slides axially on an outer surface of the guide bush (21), and **in that** the connecting channel (41) comprises a recess (40) formed at the guide bush (21).

4. Damping valve arrangement (1) for a vibration damper according to Claim 1, **characterized in that** the connecting channel (41) comprises an opening (43) formed at the control piston (4).

5. Damping valve arrangement (1) for a vibration damper according to Claim 3, **characterized in that** the recess (40) formed at the guide bush (21) has tangential peripheral portions (44; 45) running at least partially parallel to one another.

6. Damping valve arrangement (1) for a vibration damper according to Claim 3, **characterized in that** the recess (40) formed at the guide bush (21) has tangential peripheral portions (44; 45) running at least partially obliquely in relation to one another.

7. Damping valve arrangement (1) for a vibration damper according to Claim 1, **characterized in that** the control arrangement (3) comprises at least one adjusting component (46), which at least partially and at least for a time covers the connecting channel (41).

8. Damping valve arrangement (1) for a vibration damper according to Claim 1, **characterized in that** the control arrangement (3) comprises a continuous inner sleeve (47), which penetrates all of the components of the control arrangement (3) and holds them together by a plastic deformation of the peripheral regions.

9. Damping valve arrangement (1) for a vibration damper according to Claim 8, **characterized in that** the sleeve (47) comprises at least one transverse bore (50), which is designed to form the connecting channel (41) and, when there is an axial displacement of the control piston (9) in the direction of the spring arrangement (24), is at least partially closed by the control piston (9) and, when there is an axial displacement of the control piston (9) in the direction of the pot base (30), is opened again.

## Revendications

1. Agencement de soupape d'amortissement (1) pour un amortisseur de vibrations, comprenant:
- un piston d'amortissement (2) disposé à l'intérieur d'un cylindre (31) au moins partiellement rempli d'un fluide d'amortissement, attaché axialement à une tige de piston (4) et déplaçable axialement, qui présente au moins un canal d'écoulement (16) réalisé dans le piston d'amortissement (2) et recouvert avec au moins un disque de soupape (15) et qui divise le cylindre (31) en une première chambre de travail côté tige de piston (32) et une seconde chambre de travail (33) détournée de la tige de piston (4),
- un agencement de commande (3) installé sur la tige de piston (4), de façon coaxiale au piston d'amortissement (2), comprenant un gobelet de commande (8) avec une paroi de gobelet cylindrique (29) et un fond de gobelet (30) en forme de disque disposé sur une extrémité du gobelet de commande (8) détournée du piston d'amortissement (2), ainsi qu'un piston de commande (9) disposé dans le gobelet de commande (8) et déplaçable axialement, qui limite axialement une chambre de commande (11) enfermée dans le gobelet de commande (8) et dans lequel l'agencement de soupape d'amortissement (2) présente une liaison d'arrivée (36), qui relie la première chambre de travail (32) à la chambre de commande (11), et dans lequel au moins un agencement de ressorts (24) est disposé entre le piston de commande (8) et le piston d'amortissement (2) et exerce une force de ressort définie sur le disque de soupape (15) axialement en direction du canal d'écoulement (16) et sur le piston de commande (9) en direction du fond de gobelet (30),
**caractérisé en ce que** l'agencement de soupape d'amortissement présente un canal de liaison (41), qui relie la première chambre de travail (32) à la seconde chambre de travail (33), dans lequel le canal de liaison (41) est disposé de telle manière que celui-ci soit au moins partiellement fermé par le piston de commande (9) lors d'un déplacement axial du piston de commande (9) en direction du piston d'amortissement (2) et qu'il soit de nouveau ouvert lors d'un déplacement axial du piston de commande (9) en direction du fond de gobelet (30).

2. Agencement de soupape d'amortissement (1) pour un amortisseur de vibrations selon la revendication 1, **caractérisé en ce que** le canal de liaison (41) comprend une liaison d'écoulement (39) réalisée sur la tige de piston (4).

3. Agencement de soupape d'amortissement (1) pour un amortisseur de vibrations selon au moins une des revendications 1 ou 2, **caractérisé en ce qu'**une douille de guidage tubulaire (21) est disposée entre le piston d'amortissement (2) et le fond de gobelet (30) de l'agencement de commande (3), dans lequel le piston de commande (9) entoure en direction périphérique la douille de guidage (21) et glisse axialement sur la surface extérieure de la douille de guidage (21), et **en ce que** le canal de liaison (41) comprend un évidement (40) formé sur la douille de guidage (21).

4. Agencement de soupape d'amortissement (1) pour un amortisseur de vibrations selon la revendication 1, **caractérisé en ce que** le canal de liaison (41) comprend un passage (43) formé sur le piston de commande (4).

5. Agencement de soupape d'amortissement (1) pour un amortisseur de vibrations selon la revendication 3, **caractérisé en ce que** l'évidement (40) formé sur la douille de guidage (21) présente des parties de bord tangentielles (44; 45) s'étendant au moins en partie parallèlement l'une à l'autre.

6. Agencement de soupape d'amortissement (1) pour un amortisseur de vibrations selon la revendication 3, **caractérisé en ce que** l'évidement (40) formé sur la douille de guidage (21) présente des parties de bord tangentielles (44; 45) s'étendant au moins en partie en oblique l'une par rapport à l'autre.

7. Agencement de soupape d'amortissement (1) pour un amortisseur de vibrations selon la revendication 1, **caractérisé en ce que** l'agencement de commande (3) comprend au moins une pièce de réglage (46), qui masque au moins partiellement et au moins temporairement le canal de liaison (41).

8. Agencement de soupape d'amortissement (1) pour un amortisseur de vibrations selon la revendication 1, **caractérisé en ce que** l'agencement de commande (3) comprend un manchon intérieur continu (47), qui traverse tous les composants de l'agencement de commande (3) et solidarise les régions de bord par une déformation plastique.

9. Agencement de soupape d'amortissement (1) pour un amortisseur de vibrations selon la revendication 8, **caractérisé en ce que** le manchon (47) présente au moins un trou percé transversalement (50) pour la formation du canal de liaison (41), qui est au moins partiellement fermé par le piston de commande (9) lors d'un déplacement axial du piston de commande (9) en direction de l'agencement de ressorts (24) et qui est de nouveau ouvert lors d'un déplacement axial du piston de commande (9) en direction du fond de gobelet (30).
